# EUROPÄISCHE PATENTSCHRIFT

(11) **EP 3 728 889 B1**
(45) Veröffentlichungstag und Bekanntmachung des Hinweises auf die Patenterteilung: **20.07.2022**
(21) Anmeldenummer: 18807864.6
(22) Anmeldetag: 13.11.2018
(51) Int. Cl.: F16D 13/52, F16D 13/69, B60K 6/387

(54) **DREHMOMENTÜBERTRAGUNGSEINHEIT UND ANTRIEBSSTRANG**
TORQUE TRANSMISSION UNIT AND DRIVE TRAIN
UNITÉ DE TRANSMISSION DE COUPLE ET CHAÎNE CINÉMATIQUE

(30) Priorität: 19.12.2017 DE 102017130444
(43) Veröffentlichungstag der Anmeldung: 28.10.2020
(73) Patentinhaber: Schaeffler Technologies AG & Co. KG, 91074 Herzogenaurach (DE)
(72) Erfinder: HURLE, Thomas, 77830 Bühlertal (DE); REIMNITZ, Dirk, 77815 Bühl (DE)
(86) Internationale Anmeldenummer: PCT/DE2018/100921
(87) Internationale Veröffentlichungsnummer: WO 2019/120366

(56) Entgegenhaltungen:
- EP-A1- 0 647 792
- EP-A2- 2 161 466
- WO-A1-2015/070859
- DE-A1-102015 205 574
- GB-A- 1 311 258

## Beschreibung

Die Erfindung betrifft eine Drehmomentübertragungseinheit zur reibschlüssigen Übertragung eines Drehmoments gemäß dem Oberbegriff des Anspruchs 1, insbesondere eine Kupplungseinrichtung, für einen Antriebsstrang eines Kraftfahrzeugs, sowie den Antriebsstrang selbst.

Aus dem Stand der Technik ist insbesondere im Rahmen der Hybridisierung die Anforderung bekannt, trockene Doppelkupplungen weitestgehend rotorintegriert vorzusehen, wobei Anwendung von trockenen Lamellenkupplungen die einzige praktische Lösung darstellt, das erforderliche Moment auf kleinem Durchmesser übertragen zu können. Trockene Lamellenkupplungen bewirken jedoch vor allem in den Verzahnungen an den Lamellenträgern mehr Reibungsverluste als nasse Lamellenkupplungen, da diese ölgeschmiert sind. Dadurch kommt es zu einem größeren Kraftbedarf zur Verschiebung der Lamellen bzw. das zu übertragende Drehmoment wird bei gleicher Betätigungskraft kleiner. Aufgrund der relativ kleinen Durchmesser der Lamellen der trockenen Reibkupplung und der damit verbundenen hohen Tangentialkräfte ist dies ein relativ großer Verlustanteil.

Lamellen in Lamellenkupplungen sind üblicherweise drehfest aber axial verlagerbar mit benachbarten Kupplungsteilen zu verbinden, die dem Antrieb oder Abtrieb der Kupplung zugeordnet sind. Diese drehmomentübertragende formschlüssige Verbindung zwischen den Lamellen und den Nachbarbauteilen der Kupplung wird üblicherweise durch eine Verzahnung realisiert. Im offenen Zustand der Kupplung, wenn kein Drehmoment zwischen den Kupplungsantrieb und dem Kupplungsabtrieb übertragen wird, sind die Lamellen des Antriebs und die Lamellen des Abtriebs axial voneinander beabstandet bzw. gelüftet. Wird die Kupplung geschlossen, werden die Lamellen zusammengepresst, damit sich die Reibflächen der Lamellen berühren und durch Reibung Drehmoment zwischen den dem Antrieb und den dem Abtrieb zugeordneten Lamellen übertragen werden kann.

Dabei erfolgt der Anstieg des übertragbaren Drehmoments beim Schließen der Kupplung und die Reduzierung des übertragbaren Drehmoments beim Öffnen der Kupplung nicht schlagartig. Es kommt während des Einrückens bzw. Schließens der Kupplung oder des Ausrückens bzw. Öffnen der Kupplung zu einem kontinuierlichen Momentaufbau bzw. Momentabbau. Die kontinuierliche Momentveränderung hat zur Folge, dass es Betriebszustande gibt, bei denen die Lamellen axial verschoben werden, während sie bereits oder noch Drehmoment übertragen. Somit entsteht an der drehmomentübertragenden axial verlagerbaren formschlüssigen Verbindung zwischen den sich bewegenden Lamellen und den axial feststehenden Kupplungsbauteilen eine der axialen Bewegung entgegen gerichtete Reibkraft. Diese Reibkraft ist umso höher, je größer die durch das übertragene Moment verursachte Tangentialkraft an der Verbindungstelle ist und je höher der an der Verbindungstelle wirkende Reibwert ist. Die entstehenden Tangentialkräfte und die Reibwerte an der Verbindungsstelle lassen sich meistens nur geringfügig verändern, da sie weitgehend von der Grundfunktion der Kupplung und den verwendeten Werkstoffen der Reiblamellen und dem Werkstoff des Kupplungsbauteils, in das die Reiblamelle formschlüssig aber begrenzt axial verlagerbar eingreift (z. B. eine Verzahnung), bestimmt werden. Die der axialen Bewegung entgegenwirkenden Reibkräfte in den axial verlagerbaren Verbindungsstellen erhöhen die für ein bestimmtes übertragbares Drehmoment benötigte Kupplungsbetätigungskraft. Zudem resultiert aus den auftretenden Reibkräften eine Minderung der Regelbarkeit der Kupplung sowie ein ungleichmäßiger Energieeintrag in die Kupplung.

Aus der EP 2 161 466 A2 ist eine Drehmomentübertragungseinheit bekannt, die auf den Oberbegriff des Anspruchs 1 lesbar ist.

Hiervon ausgehend liegt der vorliegenden Erfindung die Aufgabe zugrunde, eine Drehmomentübertragungseinheit sowie einen damit ausgestalteten Antriebsstrang eines Kraftfahrzeuges zur Verfügung zu stellen, die eine hohe Lebensdauer mit geringen Herstellungskosten und einem energieeffizienten Betrieb kombinieren.

Diese Aufgabe wird durch die erfindungsgemäße Drehmomentübertragungseinheit nach Anspruch 1 gelöst. Vorteilhafte Ausgestaltungen der Drehmomentübertragungseinheit sind in den Unteransprüchen 2 bis 9 angegeben. Ein erfindungsgemäßer Antriebsstrang wird gemäß Anspruch 10 zur Verfügung gestellt.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft eine Drehmomentübertragungseinheit zur reibschlüssigen Übertragung eines Drehmoments bzw. einer Drehbewegung, wobei die Drehmomentübertragungseinheit insbesondere als eine Kupplungseinrichtung für einen Antriebsstrang eines Kraftfahrzeugs ausgestaltet ist. Sie umfasst einen Lamellenträger mit mehreren auch als Kupplungslamellen bzw. Reiblamellen bezeichneten Lamellen, die mit Gegenlamellen der Drehmomentübertragungseinheit zu einem Reibpaket zusammendrückbar sind. Die Drehmomentübertragungseinheit umfasst des Weiteren ein Drehmomentübertragungselement, mit dem von dem Lamellenträger ein Drehmoment auf ein an den Lamellenträger angeschlossenes oder anschließbares Maschinenelement, wie z. B. eine Getriebeeingangswelle, übertragbar ist, wobei die Lamellen auf dem Lamellenträger unter Ausführung einer Gleitbewegung bzw. Rutschbewegung auf zumindest einem ein Drehmoment formschlüssig übertragbaren Formelement, insbesondere einer Verzahnung, des Lamellenträgers wie zum Beispiel auf einer Steckverzahnung bzw. Keilwellenverzahnung, axial verschiebbar angeordnet sind. Es ist erfindungsgemäß vorgesehen, dass die Drehmomentübertragungseinheit weiterhin zumindest eine axial wirkende Federeinrichtung aufweist, mit der wenigstens eine Lamelle zusätzlich zur Gleitbewegung in Bezug zum Drehmomentübertragungselement axial verlagerbar ist.

Die Richtungsangabe axial bezieht sich auf die Rotationsachse der Drehmomentübertragungseinheit, um die sich die Lamellen drehen. Somit ist die axiale Richtung orthogonal zu den Reibflächen der Lamellen orientiert. Die tangentiale Richtung ist somit eine in Umfangsrichtung um die Rotationsachse verlaufende Richtungsangabe.

Dabei ist die vorliegende Erfindung nicht allein auf eine Kupplungseinrichtung als erfindungsgemäße Drehmomentübertragungseinheit gerichtet, sondern die Drehmomentübertragungseinheit kann auch eine Bremse sein, die die erfindungsgemäßen Merkmale aufweist, wobei hier die über ein anliegendes Drehmoment eingetragene mechanische Energie in Wärme umgewandelt wird.

Das Drehmoment formschlüssig übertragbare Formelement ist dabei eine drehmomentübertragende und eine axiale Verlagerung realisierbare Verbindung, die in einer bevorzugten Ausgestaltung als Verzahnung zur Realisierung einer Keilwellenverbindung ausgeführt sein kann, wobei auch andere Möglichkeiten nicht ausgeschlossen werden sollen, wie z.B. die axiale Führung von Fortsätzen bzw. Vorsprüngen in Öffnungen bzw. die axiale Führung von Stiften in axial verlaufenden Bohrungen.

Das heißt, dass somit die Lamellen zusätzlich zur Gleitbewegung auf dem Formelement auch noch eine von der Federeinrichtung ermöglichte axiale Verlagerung ausführen können, so dass trotz einer die axiale Gleitbewegung verhindernden Reibkraft die Lamellen weiter axial verlagert werden können.

Vorteilhafterweise ist vorgesehen, dass die Drehmomentübertragungseinheit weiterhin wenigstens einer Lamelle zugeordnet einen Steg aufweist, der rotationsfest mit dem Drehmomentübertragungselement verbunden ist. Die Federeinrichtung ist in dieser Ausgestaltung als extra Bauelement im Drehmomentübertragungspfad zwischen einer Reibfläche einer jeweiligen Lamelle und Steg angeordnet. Dabei ist der Steg vorzugsweise auch axial fest am Drehmomentübertragungselement angeordnet. Das Drehmomentübertragungselement kann auch als Segmentträger bezeichnet werden.

Der Lamellenträger weist mehrere Lamellenträgersegmente auf, die jeweilige Formelemente, insbesondere Verzahnungen, aufweisen, auf denen jeweils zumindest eine Lamelle rotationsfest angeordnet und unter Ausführung der Gleitbewegung axial verschiebbar ist.

Unter einem Lamellenträgersegment ist dabei ein Teil eines einen Lamellenträger ausbildenden Systems zu verstehen, wobei der Lamellenträger axial in mehrere Bestandteile, die sogenannten Segmente, unterteilt ist.

Da auf die Lamellen einer Kupplung unterschiedliche Kräfte wirken und die Lamellen einer Kupplung auch unterschiedliche Axialbewegungen durchführen, ist es sinnvoll jeder Lamelle ein Lamellenträgersegment zuzuordnen. Es sollte allerdings möglichst vermieden werden, dass die Lamellenträgerabschnitte bei ihrer axialen Bewegung mit benachbarten Lamellenträgerabschnitten in Kontakt kommen.

Bei Lamellenkupplungen mit sehr vielen Lamellen, kann es allerdings auch sinnvoll sein, dass Lamellen, die ähnliche axiale Bewegungen ausführen, gemeinsam auf einem Lamellenträgersegment angeordnet sind, um die Anzahl der Lamellenträgersegmente zu begrenzen und somit Bauraum und Kosten einzusparen.

Das heißt, dass erfindungsgemäß und um die Wirkung der störenden Reibkräfte in den axial verlagerbaren Verbindungsstellen zu reduzieren, ein spezieller Lamellenträger verwendet wird, der verschiedene axial elastische Abschnitte aufweist. Diese Abschnitte sind verschiedenen Lamellen zugeordnet. Die Lamellen sind nach wie vor durch eine axial verschiebbare drehmomentübertragende formschlüssige Verbindung mit den Abschnitten des Lamellenträgers verbunden.

In Betriebszuständen, in denen die Lamellen kein oder nur ein geringes Drehmoment übertragen, rutschen die Lamellen axial auf den Abschnitten des Lamellenträgers hin und her.

Wenn die in der formschlüssigen Verbindung wirkenden axialen Reibkräfte größer sind als die zum Verschieben der elastisch angebundenen Lamellenträgerabschnitte benötigten Kräfte, bewegen sich bei Anlage einer Betätigungskraft, die größer ist als die jeweilige zum Verschieben der elastisch angebundenen Lamellenträgerabschnitte benötigte Kraft, die Lamellenträgerabschnitte zusammen mit den Lamellen in axialer Richtung. Die axiale Betätigungskraft, die aufgebracht werden muss, um die Lamellen zu verschieben, hängt somit nicht mehr von den auftretenden Reibkräften ab, sondern nur noch von der Federsteifigkeit und der Anzahl der Federeinrichtungen der Lamellenträgerabschnitte. Somit können die axialen Betätigungskräfte zur Verschiebung der Lamellen und die mit ihnen einhergehenden Nachteile für die Kupplung stark reduziert werden.

Vorzugsweise findet die Ausgestaltung der Drehmomentübertragungseinheit mit Lamellenträgersegmenten Anwendung bei mit radial innen angeordneten Formelementen ausgestatteten Lamellen bzw. innenverzahnten Lamellen. Erfindungsgemäß soll jedoch auch die Anwendung der Lamellenträgersegmente auf außen mit komplementären Formelementen versehenen bzw. verzahnten Lamellen nicht ausgeschlossen werden.

Drehmomentübertragungseinheiten mit axial elastisch angebundenen Lamellenträgersegmenten bieten für die mit radial innen angeordneten Formelementen ausgestatteten Lamellen bzw. innenverzahnten Lamellen den Vorteil, dass die Formelemente nahe des Reibflächeninnendurchmessers angeordnet werden können, was dem für diese Lamellen größtmöglichen Formelementeteilkreisdurchmesser entspricht. Bei Drehmomentübertragungseinheiten mit radial innen axial fixiertem Lamellenträger und axial elastisch an die Innenlamellen angebundene Formelemente, sollte der Formelementeteilkreisdurchmesser kleiner sein, um innerhalb des Reibflächeninnendurchmessers Platz für die elastischen Elemente zu schaffen.

Vorteilhafterweise umfasst die Federeinrichtung mehrere erste Federelemente, wobei jeweils eines der mehreren ersten Federelemente an einem jeweiligen der mehreren Lamellenträgersegmente angeordnet ist, so dass eine Gleitbewegung eines jeweiligen Lamellenträgersegments mittels eines jeweiligen ersten Federelements ermöglicht wird.

Dabei ist die Drehmomentübertragungseinheit insbesondere dann vorteilhaft ausgestaltet, wenn das erste Federelement und das

Drehmomentübertragungselement (60) mittels wenigstens eines Verbindungselements, vorzugsweise mehrerer Verbindungselemente wie z. B. Niete, und insbesondere über den Steg, derart miteinander verbunden sind, dass ein Drehmoment von dem ersten Federelement auf das Drehmomentübertragungselement, insbesondere mittelbar über den Steg, übertragbar ist.

Derart wird Drehmoment von der jeweiligen Lamelle über die Federeinrichtung auf den der Lamelle zugeordneten Steg übertragen, so dass bei Realisierung dieses Konzepts an allen Lamellen der Drehmomentübertragungseinheit insgesamt das von der Drehmomentübertragungseinheit zu übertragene Gesamt-Drehmoment reibschlüssig von allen Lamellen auf dem Lamellenträger anteilig auf dazugehörige Stege übertragen wird und von diesen auf das Drehmomentübertragungselement übertragen wird, das das Gesamt-Drehmoment wiederum z.B. auf eine Getriebeeingangswelle überträgt.

Das erste Federelement sollte dabei an dem Lamellenträgersegment fest angeordnet sein, insbesondere mittels mehrerer Nietverbindungen. Es soll aber erfindungsgemäß auch die konstruktive Ausgestaltung nicht ausgeschlossen sein, bei der das erste Federelement an einem jeweiligen Steg fest angeschlossen ist, zu Beispiel mittels einer Nietverbindung.

In günstiger konstruktiver Ausgestaltung des ersten Federelements ist vorgesehen, dass dieses eine im Wesentlichen ringförmige Biegefeder ist, die wenigstens einen Biegeabschnitt aufweist, der insbesondere axial versetzt angeordnet ist. Das Federelement hat weiterhin in Bezug zu diesem Biegeabschnitt radial außen oder radial innen wenigstens einen, insbesondere mehrere Befestigungsabschnitte zur mechanischen Befestigung an einem Lamellenträgersegment. Außerdem ist vorgesehen, dass diese im Wesentlichen ringförmige Biegefeder wenigstens einen vom Biegeabschnitt radial außen oder radial innen abstehenden Befestigungsabschnitt zur mechanischen Befestigung an einem Steg oder dem Drehmomentübertragungselement aufweist.

In einer kostengünstigen Ausführungsform ist vorgesehen, dass zumindest bei den im Reibpaket axial innen positionierten Lamellen bzw. Lamellenträgersegmenten an einem jeweiligen Steg beidseitig jeweils ein erstes Federelement anliegt, so dass sich axial beidseitig des Steges angeordnete Lamellenträgersegmente über deren erste Federelemente an diesem Steg abstützen können und auf diesen Steg Drehmoment übertragen können.

Weiterhin ist zur Realisierung einer kostengünstigen und haltbaren Verbindung zwischen Steg und Drehmomentübertragungselement vorzugsweise vorgesehen, dass der Steg mit dem Drehmomentübertragungselement verstemmt ist. Alternativ kann der Steg auch direkt aus dem Drehmomentübertragungselement ausgeformt sein und somit einen integralen Bestandteil des Drehmomentübertragungselements bilden. In einer weiteren konstruktiven Alternative können die ersten Federelemente auch direkt am Drehmomentübertragungselement befestigt sein.

Eine weitere Ausführungsform der erfindungsgemäßen Drehmomentübertragungseinheit sieht vor, dass die Federeinrichtung ein zweites Federelement als Bestandteil einer Lamelle im Drehmomentübertragungspfad zwischen einer Reibfläche einer jeweiligen Lamelle und einer Anlagefläche der Lamelle, mit der die Lamelle an dem drehmomentübertragenden Formelement bzw. der Verzahnung des Lamellenträgersegments gleitet, aufweist.

Insbesondere ist dabei das zweite Federelement als ringförmige Feder ausgestaltet, wobei an der ringförmigen Feder mechanische Verbindungen zur Reibfläche sowie mechanische Verbindungen zur Anlagefläche ausgebildet sind. Die mechanischen Verbindungen sind vorzugsweise als Nietverbindungen ausgeführt. Die mechanischen Verbindungen zur Reibfläche sind vorzugsweise durch jeweils zwei am Umfang der ringförmigen Feder nebeneinander ausgebildete Verbindungen ausgeführt. Die mechanischen Verbindungen zur Anlagefläche sind vorzugsweise durch jeweils eine am Umfang der ringförmigen Feder ausgebildete Verbindung ausgeführt, sie sich zwischen zwei benachbarten Paaren von Verbindungen zur Reibfläche befindet. Die mechanischen Verbindungen zur Reibfläche realisieren mechanische Verbindungen nach radial außen. Die mechanischen Verbindungen zur Anlagefläche realisieren mechanische Verbindungen nach radial innen.

Derart lässt sich eine ähnliche Absenkung der axialen benötigten Betätigungskräfte zur Verschiebung der Lamellen bzw. deren Reibflächen erzielen wie bei der Anwendung der Lamellenträgersegmente.

Mit der erfindungsgemäßen Drehmomentübertragungseinheit, die als Kupplungseinrichtung ausgeführt ist, lässt sich erfindungsgemäß ein Hybridmodul zur Verfügung stellen, welches neben der Kupplungseinrichtung, die als Doppelkupplungsvorrichtung oder auch als Trennkupplung vorgesehen sein kann, eine elektrische Maschine aufweist, die mechanisch mit der Kupplungseinrichtung gekoppelt ist, sodass von der elektrischen Maschine ein Drehmoment über die Drehmomentübertragungseinheit auf eine Getriebeeingangswelle sowie in umgekehrter Richtung übertragbar ist.

Ein weiterer Aspekt der vorliegenden Erfindung ist ein Antriebsstrang für ein Kraftfahrzeug mit einer Antriebsmaschine, insbesondere mit einer Verbrennungskraftmaschine, mit einer als Kupplungseinrichtung ausgestalteten erfindungsgemäßen Drehmomentübertragungseinheit sowie einem Fahrzeuggetriebe, wobei die Drehmomentübertragungseinheit mit der Antriebsmaschine und dem Fahrzeuggetriebe mechanisch verbunden ist.

Derart lässt sich durch die erfindungsgemäße Drehmomentübertragungseinheit ein Drehmoment zwischen Verbrennungskraftmaschine und Fahrzeuggetriebe übertragen.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: einen Teilschnitt einer als Kupplungseinrichtung ausgestalteten erfindungsgemäßen Drehmomentübertragungseinheit in einer ersten Ausführungsform,
- Fig. 2:: Lamellenträgersegmente der als Kupplungseinrichtung ausgestalteten Drehmomentübertragungseinheit in perspektivischer Ansicht,
- Fig. 3:: ein mit der erfindungsgemäßen Drehmomentübertragungseinheit ausgestattetes Hybridmodul in einem Teilschnitt,
- Fig. 4:: die Lamellenträgersegmente der Drehmomentübertragungseinheit in einer ersten perspektivischen Schnittansicht,
- Fig. 5:: die in Figur 4 dargestellten Lamellenträgersegmente der Drehmomentübertragungseinheit in einer zweiten perspektivischen Schnittansicht,
- Fig. 6:: die Federeinrichtung der erfindungsgemäßen Drehmomentübertragungseinheit in perspektivischer Ansicht,
- Fig. 7:: in einer perspektivischen Darstellung einen Teilschnitt einer als Kupplungseinrichtung ausgestalteten erfindungsgemäßen Drehmomentübertragungseinheit in einer zweiten Ausführungsform,
- Fig. 8:: in einer perspektivischen Darstellung die in Fig. 7 dargestellte Kupplungseinrichtung mit anderem Schnittverlauf,
- Fig. 9:: einen Teilschnitt der in Figur 8 dargestellten Kupplungseinrichtung, und
- Fig. 10:: in perspektivischer Darstellung eine ringförmige Feder zur Anordnung in der Kupplungseinrichtung der zweiten Ausführungsform.

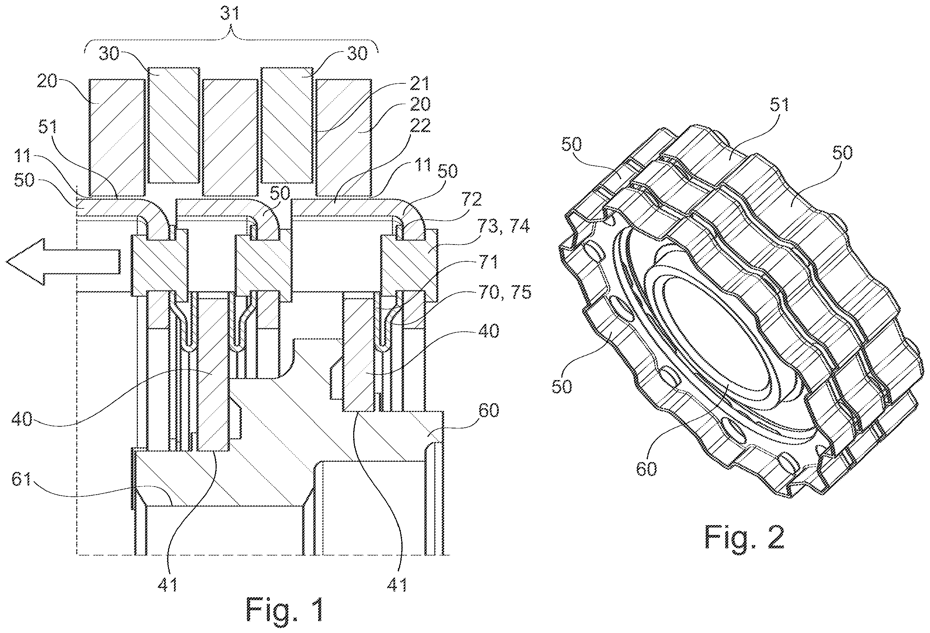

Wie aus Figur 1 ersichtlich ist, umfasst die erfindungsgemäße und als Kupplungseinrichtung ausgestaltete Drehmomentübertragungseinheit mehrere Lamellen 20, die mit Gegenlamellen 30 zu einem Reibpaket 31 reibschlüssig verbindbar sind, um Drehmoment über Reibflächen 21 der Lamellen 20 mittels der Drehmomentübertragungseinheit übertragen zu können.

In der hier dargestellten Ausführungsform und im Gegensatz zu herkömmlichen Reibkupplungen ist jeder Lamelle 20 ein Lamellenträgersegment 50 als Bestandteil eines alle Lamellen 20 tragenden Lamellenträgers 10 zugeordnet.

Eine jeweilige Lamelle 20 kann auf dem ihr zugeordneten Lamellenträgersegment 50 mit ihrer dort vorgesehenen Steckverzahnung 11 auf der Verzahnung 51 des Lamellenträgersegments 50 axial verschoben werden.

Dabei rutschen Anlageflächen 22, die durch die Steckverzahnung 11 einer jeweiligen Lamelle 20 ausgebildet sind und an der Verzahnung 51 des Lamellenträgersegments 50 anliegen, axial auf der Verzahnung 51. Diese axiale Schiebe-Bewegung, angedeutet mit dem nach links weisenden Pfeil, tritt dann auf, wenn die Lamellen 10 und Gegenlamellen 30 zu dem Reibpaket 31 zusammengedrückt werden. In diesem Zustand überträgt das Reibpaket 31 ein Drehmoment, sodass die Lamellen 20 auch tangential belastet werden. Dies führt dazu, dass die Anlageflächen 22 an komplementär angeordneten Flächen der Verzahnung 51 des Lamellenträgers 50 andrücken. Entsprechend erhöht sich die zwischen der jeweiligen Anlagefläche 22 und der Verzahnung 51 auftretende Reibkraft. Um ein noch höheres Drehmoment übertragen zu können, müssen die Lamellen 10 und Gegenlamellen 30 mit noch größerer axialer Kraft zusammengedrückt werden. Um eine dafür benötigte weitere axiale Verschiebung der Lamellen 20 zu ermöglichen, sind die Lamellen auf einzelnen Lamellenträgersegment den 50 angeordnet, die sich selbst axial verlagern können. Über eine jeweilige Nietverbindung 73 ist an ein jeweiliges Lamellenträgersegment 50 eine Federeinrichtung 70 mechanisch angeschlossen. Die Federeinrichtung 70 umfasst jeder Lamelle 10 zugeordnet ein erstes Federelement 75, welches sich mit einem axial vorstehenden Biegeabschnitt 71 (axial) an einem neben dem Lamellenträgersegment 50 angeordneten Steg 40 (abstützt). Weiterhin ist das Federelement 75 an Verbindungsstellen fest mit dem Steg verbunden, so dass zwischen dem Federelement 75 und dem Steg und somit auch dem Drehmomentübertragungselement 60 axiale, radiale und tangentiale Kräfte übertragen werden können. Ebenso ist das Federelement 75 mit dem Lamellenträgersegment 50 verbunden. Der Steg 40 wiederum ist fest an einem Drehmomentübertragungselement 60, auch als Nabe, bezeichnet, zum Beispiel mittels einer Stemmverbindung 41 angeordnet. Das bedeutet, dass alle Lamellenträgersegment 50 einen gemeinsamen Abtrieb in Form des Drehmomentübertragungselements 60 haben. Aufgrund der axialen, federnden Abstützung eines jeweiligen Lamellenträgersegments 50 mit daran drehfest angeordneter Lamelle 20 an dem axial fixierten Steg 40 ist es möglich, dass sich ein jeweiliges Lamellenträgersegment 50 zusammen mit der daran angeordneten Lamelle 20 axial bewegt. Das bedeutet, dass eine beim Zusammendrücken des Reibpakets 31 erfolgende axiale Verlagerung einer Lamelle 20 zum einen durch eine axiale Verlagerung der Lamelle 20 auf einem Lamellenträgersegment 50 erfolgt, zum anderen aber auch das Lamellenträgersegment 50 zusammen mit der Lamelle 20 axial bewegt werden kann, um eine dichte Pressung der Lamellen 20 und Gegenlamellen 30 zu ermöglichen.

Demzufolge muss zur vollständigen axialen Verlagerung einer Lamelle 20 nicht mehr eine hohe Reibkraft an einer Verzahnung der Lamelle 20 überwunden werden, sondern lediglich in der ersten Bewegungsphase eine relativ geringe Reibkraft, und in der zweiten Bewegungsphase eine von der Federeinrichtung 70 aufgebrachte elastische Rückstellkraft.

In Figur 2 sind in perspektivischer Ansicht die den gesamten Lamellenträger 10 ausbildenden Lamellenträgersegmente 50 ohne die darauf angeordneten Lamellen 20 dargestellt. Deutlich ist hierbei die Verzahnung 51 an der radialen Außenseite der Lamellenträgersegmente 50 ersichtlich. Weiterhin ist die koaxiale Ausgestaltung in Bezug auf das Drehmomentübertragungselement 60 erkennbar.

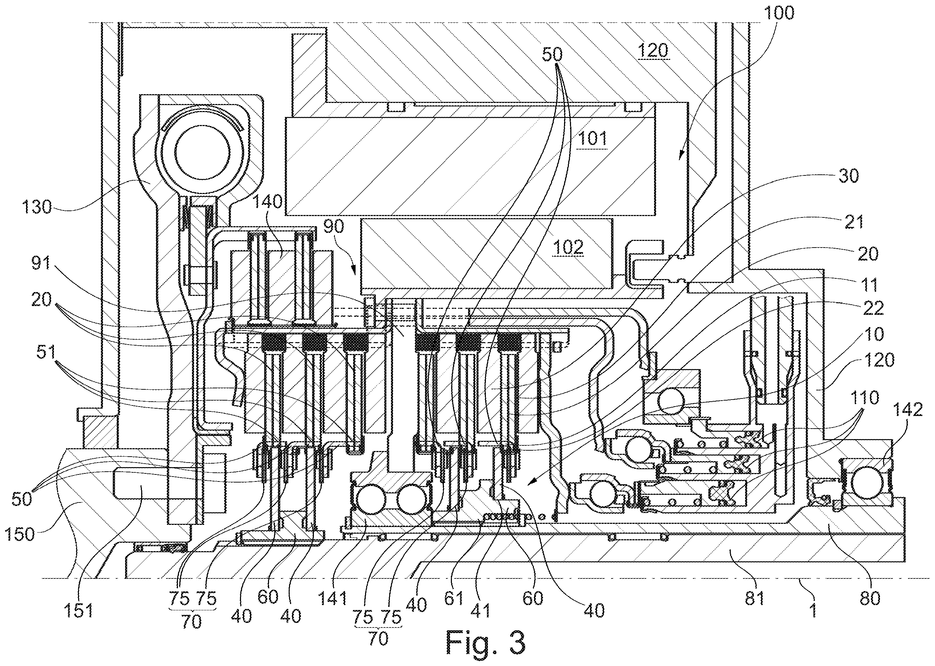

In Figur 3 ist ein Teilschnitt durch ein von der Erfindung umfasstes Hybridmodul dargestellt, welches in einer Doppelkupplungsvorrichtung 90 zwei der als Kupplungseinrichtungen ausgestalteten erfindungsgemäßen Drehmomentübertragungseinheiten aufweist.

Des Weiteren umfasst das Hybridmodul einen Rotorträger 91, der mit der Eingangsseite der Doppelkupplungsvorrichtung 90 mechanisch gekoppelt ist. Ebenso ist ein Rotor 102 einer elektrischen Maschine fest mit dem Rotorträger 91 verbunden. Derart kann ein von einem Stator 101 der elektrischen Maschine 100 und dem Rotor 102 erzeugtes Drehmoment über den Rotorträger 91 der Doppelkupplungsvorrichtung 90 zugeführt werden, die durch Schließung des Drehmoment-Pfades, nämlich durch Verpressen der jeweiligen Lamellen 20 und Gegenlamellen 30 zum Reibpaket 31 das Drehmoment auf eine mit einem jeweiligen Drehmomentübertragungselement 60 über eine Profilverzahnung 61 verbundene erste Getriebeeingangswelle 80 bzw. zweite Getriebeeingangswelle 81 leiten kann. Zudem umfasst das Hybridmodul eine Trennkupplung 140, mit der ein von einer angeschlossenen Verbrennungskraftmaschine zur Verfügung gestelltes Drehmoment über die dargestellte Kurbelwelle 150 und das daran über die Verschraubung 51 angeschlossene Zweimassenschwungrad 130 auf den Rotorträger 91 übertragbar ist. Derart lässt sich auch das von der Verbrennungskraftmaschine zur Verfügung gestellte Drehmoment über die Doppelkupplungsvorrichtung 90 den beiden Getriebeeingangswellen 80,81 zuführen. Weiterhin umfasst das dargestellte Hybridmodul Betätigungseinrichtungen 110, die zu Betätigung der Trennkupplung 140 sowie auch der Teilkupplungen der Doppelkupplungsvorrichtung 90 dienen.

Die genannten Bauelemente bzw. Einrichtungen sind in einem Gehäuse 120 aufgenommen, wobei sich der Rotorträger 91 mit dem Rotationslager 141 auf der ersten Getriebeeingangswelle 80 abstützt. Die erste Getriebeeingangswelle 80 stützt sich wiederum mit dem Rotationslager 142 an dem Gehäuse 120 ab.

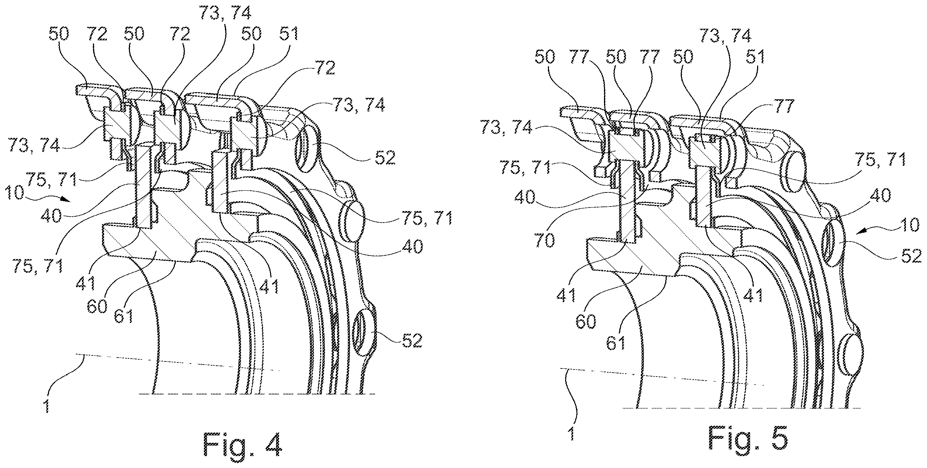

Sämtliche Bauelemente sind rotationssymmetrisch zur gemeinsamen Rotationsachse 1 angeordnet. In den Figuren 4 und 5 ist eine Ausführungsform der Drehmomentübertragungseinheit dargestellt, jedoch in Ansichten mit unterschiedlichem Schnittverlauf. Figur 4 zeigt dabei eine Ausführungsform, bei der auch wie in Figur 1 dargestellt ein jeweiliges erstes Federelement 75durch mehrere Nietverbindungen 73 an einem jeweiligen Lamellenträgersegment 50 angeordnet ist. Figur 4 zeigt in der Schnittebene, wie die ersten Federelemente 75 mit den ihnen zugeordneten Lamellenträgersegmenten verbunden sind. Bei jedem ersten Federelement 75 sind einige der radial nach außen und axial versetzt vom Biegeabschnitt abstehenden Befestigungsabschnitte 72 mit dem Lamellenträgersegment vernietet.

Figur 5 zeigt die in Figur 4 dargestellte Ausführungsform, allerdings in einem anderen Schnittverlauf. Es ist dabei insbesondere in Figur 5 ersichtlich, wie die ersten Federelemente 75 mit dem Drehmomentübertragungselement verbunden sind. Es sind dabei Fixierungsabschnitte 77 des ersten Federelements 75, die ebenfalls radial nach außen und axial versetzt vom Biegeabschnitt abstehenden, mit dem Steg 40 vernietet, der mit dem Drehmomentübertragungselement 60 verbunden ist. Die mit dem Lamellenträgersegment 50 verbundenen Befestigungsabschnitte 72 und die mit dem Drehmomentübertragungselement 60 verbunden. Fixierungsabschnitte 77 des ersten Federelements 75 wechseln sich auf dem Umfang des Biegeabschnitts des ersten Federelements ab. D. h., dass bei der in den Figuren 4 und 5 gezeigten Ausführungsform die Befestigungsabschnitte 72 zur Befestigung des ersten Federelements 75 am Lamellenträgersegment 50 sowie die Fixierungsabschnitte 77 zur Fixierung des ersten Federelements 75 am Steg 40 abwechselnd angeordnet sind. Dies ist auch an der Stirnseite der in den Figuren 4 und 5 dargestellten Ausführungsform erkennbar, an denen sich die Nietverbindungen 73, mit denen die Befestigungsabschnitte 72 am Lamellenträgersegment 50 fixiert sind, mit Löchern 52 im Lamellenträgersegment 50 abwechseln, die die Montagezugänglichkeit für die Vernietung zwischen den Fixierungsabschnitten 77 und den Stegen 40 ermöglichen. Alternativ können die Verbindungen zwischen einem jeweiligen Federelement 75 und dem Lamellenträgersegment 50 und die Verbindung zwischen dem ersten Federelement 75 und dem Drehmomentübertragungselement 60 auch in einer anderen Reihenfolge oder in einer anderen Position erfolgen. Alternativ können die Verbindungen zwischen dem ersten Federelement 75 und dem Lamellenträgersegment 50 und die Verbindung zwischen dem ersten Federelement und dem Drehmomentübertragungselement 60 auch durch andere Befestigungselemente oder andere Befestigungsmethoden erfolgen.

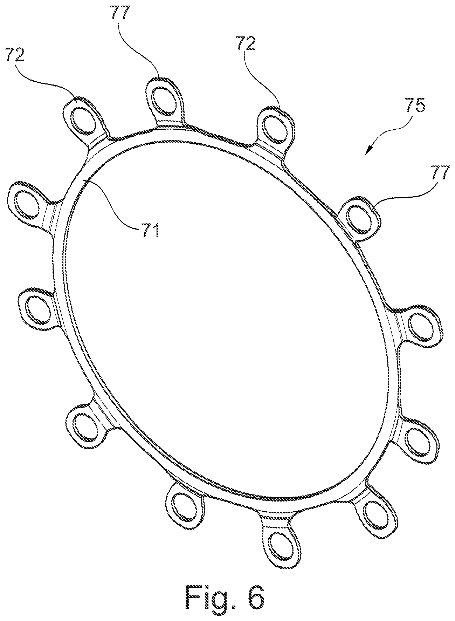

In Figur 6 ist ein verwendetes erstes Federelement 75 ersichtlich, wobei erkennbar ist, dass der Biegeabschnitt 71 an der radialen Innenseite angeordnet ist, und sich davon nach radial außen mehrere laschenförmige Befestigungsabschnitte 72 zur Befestigung mittels einer jeweiligen Nietverbindung erstrecken. Ebenfalls sind an der radialen Außenseite mehrere Fixierungsabschnitte 77 zur mechanischen Befestigung des ersten Federelements 75 an einem Steg 40 mittels mehrerer Verbindungselemente, die ebenfalls als Nietverbindungen ausgeführt sein können, angeordnet. Die Befestigungsabschnitte 72 und die Fixierungsabschnitte 77 sind alternierend am Umfang des Biegeabschnitts 71 angeordnet.

Dies ermöglicht auf einfache Weise, dass sich die beiden durch das erste Federelement verbundenen Teile Lamellenträgersegment und Drehmomentübertragungselement sich axial zueinander bewegen können, ohne sich dabei sofort zu berühren.

Die Erfindung ist nicht auf hier gezeigte Ausführungsform der Federeinrichtung 70 eingeschränkt, sondern es kann die axial wirkende Federwirkung zwischen der Verbindungsgeometrie des Lamellenträgersegments 50 zur Lamelle 20 und der Verbindungsgeometrie des Drehmomentübertragungselements 60 zur Antriebsseite oder Abtriebsseite der Drehmomentübertragungseinheit auch auf andere Weise realisiert werden, zum Beispiel indem die ersten Federelemente 75 aus dem Lamellenträgersegment 50 und/oder dem Steg 40 und/oder dem Drehmomentübertragungselement 60 ausgeformt werden.

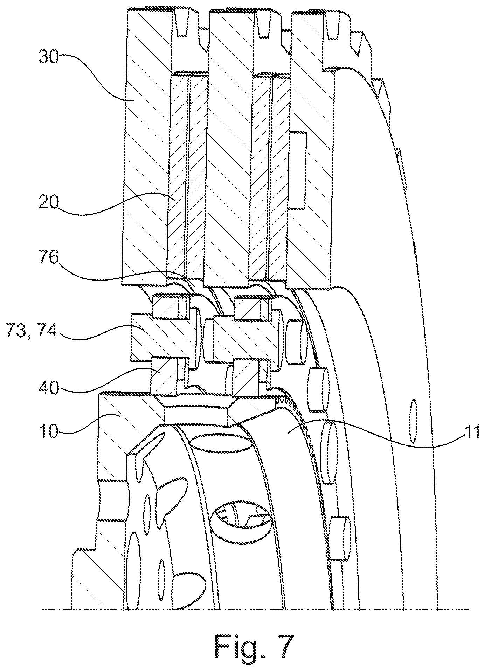

Die Erfindung ist dabei nicht auf eine Anordnung einer Federeinrichtung zwischen Lamellenträgersegment 50 und Steg 40 eingeschränkt, sondern es kann alternativ oder hinzukommend -um der gesamten Drehmomentübertragungseinheit bzw. dessen Reibpaket 31 eine axiale Weichheit zu verleihen- auch vorgesehen sein, dass eine Federeinrichtung in oder an einer jeweiligen Lamelle 20 selbst ausgebildet ist, so wie in Figur 7 dargestellt.

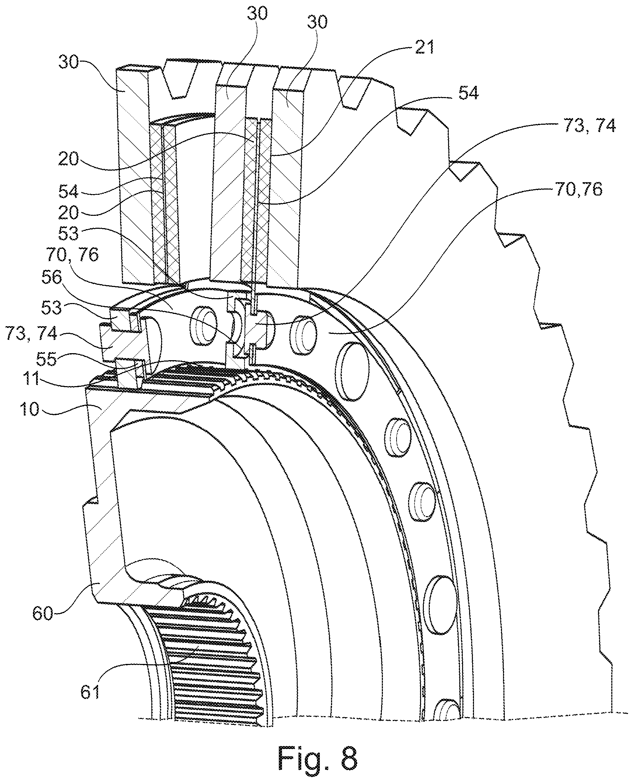

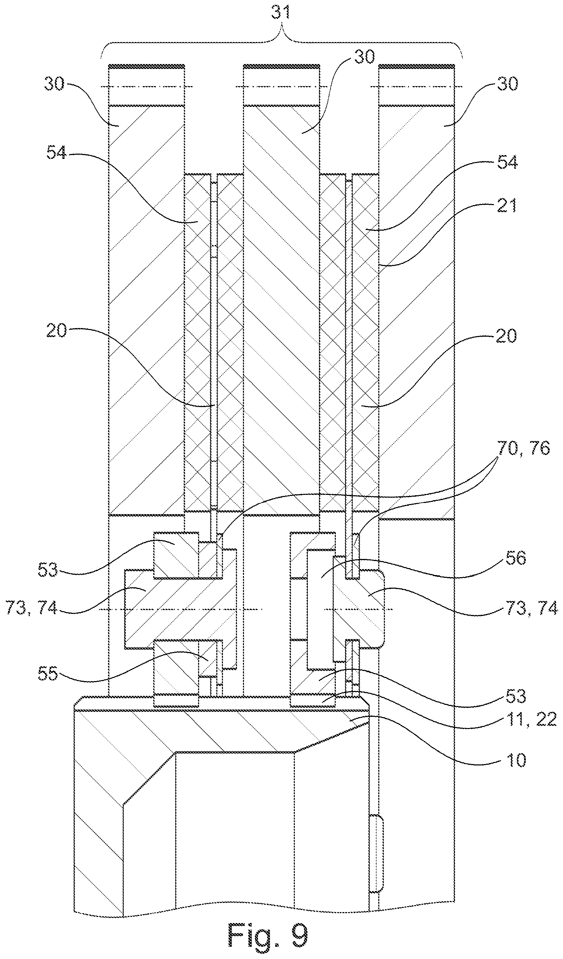

Die Figuren 8 und 9 zeigen eine als Kupplungseinrichtung ausgestaltete erfindungsgemäße Drehmomentübertragungseinheit, die in alternativer Ausgestaltung eine axiale Verlagerung der Lamellen ermöglicht.

Hier umfasst die Federeinrichtung 70 mehrere zweite Federelemente, die sich in radialer Richtung zwischen den Reibflächen 21 der Kupplungseinrichtung und der eine axiale Verlagerung ermöglichenden Steckverzahnung 11 befinden.

Die Figur 8 zeigt zwei Lamellen 20 zwischen drei Gegenlamellen 30. Die Lamellen 20 sind jeweils mit einem Verzahnungskörper 53 auf einem Lamellenträger 10, hier ein Innenlamellenträger, drehfest aber axial verlagerbar gelagert. Dazu greifen die Innenverzahnungen der Verzahnungskörper 53 in die Außenverzahnung des Lamellenträgers 10 ein. Radial zwischen den Verzahnungskörpern 53 und Belagsfederungssegmenten 54 der Lamellen 20, die für die bei Kupplungsscheiben übliche Belagsfederung zwischen den beiden Belägen einer Kupplungsscheibe sorgen, befindet sich eine Federeinheit 70, hier in Form eines einer jeweiligen Lamelle 20 zugeordneten zweiten Federelements 76. Dieses zweite Federelement 76 ermöglicht eine elastische axiale Verlagerung des Belagsfederungssegments 54 zwischen dem Verzahnungskörper 53 und dem Belagsring, der im Wesentlichen aus Kupplungsbelägen und Belagsfederung zusammengesetzt ist.

In dem in den Figuren 8 und 9 dargestellten Ausführungsbeispiel sind die zweiten Federelemente 76 jeweils als elastischer Federring ausgeführt, der auf dem Umfang abwechselnd mit dem Verzahnungskörper und den Belagsfederungssegmenten 54 verbunden ist. Die Figuren 8 und 9 zeigen jeweils links eine Lamelle 20, bei der der Schnitt durch die Verbindungsstelle zwischen dem Verzahnungskörper 53 und dem zweiten Federelement 76 verläuft. Die Verbindung ist als Nietverbindung 73 ausgeführt, bei der an jeder der auf dem Umfang versetzten Niete je eine Abstandsscheibe 55 zwischen dem Verzahnungskörper 53 und dem zweiten Federelement 76 angeordnet und mitvernietet ist. Durch diese Abstandsscheibe 55 entsteht außerhalb der Vernietungsstellen Luft zwischen dem Verzahnungskörper 53 und dem zweiten Federelement 76, wodurch sich das zweite Federelement 76 zwischen den Befestigungsstellen axial verformen kann, ohne gegen den Verzahnungskörper 53 zu stoßen.

Aus Figur 8 ist zudem ersichtlich, dass der Lamellenträger 10 und das Drehmomentübertragungselement 60 durch ein gemeinsames Bauteil ausgebildet sind.

Die Figuren 8 und 9 zeigen jeweils auf der rechten Seite eine Lamelle 20, bei der der Schnitt durch eine Verbindungsstelle zwischen dem zweiten Federelement und dem jeweiligen Belagsfederungssegment 54 verläuft. Auch diese Verbindung ist als Nietverbindung 73 ausgeführt, bei der jeweils zwei auf dem Umfang dicht hintereinander angeordnete Niete jeweils ein Belagsfederungssegment 54 mit dem zweiten Federelement 76 verbinden. Damit diese Niete nicht gegen den Verzahnungskörper 53 stoßen können, weist der Verzahnungskörper 53 hinter diesen Nieten Aussparungen 56 auf, in die die Niete hineinschwingen können, ohne den Verzahnungskörper 53 zu berühren, wenn das zweite Federelement 76 axial elastisch verformt wird. Wenn der Teil der Lamellen 20, der zwischen den Gegenlamellen 30 einklemmbar ist, axial verlagert wird und die Verzahnung zum Lamellenträger 10 keine axiale Bewegung zulässt, wird das zweite Federelement 76 elastisch verformt.

Dabei wird ein im Wesentlichen eben ausgeführtes zweites Federelement 76 in eine wellige Form gedrückt. Alternativ kann das zweite Federelement 76 mit sich axial erstreckenden Wellenbereichen ausgestattet sein. Bei einer derartigen Ausgestaltung des zweiten Federelements 76 ändert sich bei axialer Verlagerung die Wellenhöhe eines jeweiligen Wellenbereichs.

Diese Umfangswelligkeit entsteht oder ändert sich, indem die abwechselnd oder in einem anderen Muster sich auf dem Umfang des zweiten Federelements 76 wiederholenden Verbindungsstellen zum Verzahnungskörper 53 und die Verbindungsstellen zu den Belagsfederungssegmenten 54 axial gegeneinander verschoben werden. Das über die Lamelle 10 übertragene Drehmoment wird von dem zweiten Federelement 76 durch Zug- und Druckkräfte in Umfangsrichtung übertragen. Es ist daher vorgesehen, die Abschnitte des zweiten Federelements 76, die bei der Momentenrichtung, in der das größere Drehmoment zu erwarten ist, auf Zug beansprucht werden, in einer ebenen Grundform einzubauen, und die anderen Federabschnitte, die nur bei der Momentenrichtung, in der ein geringes Drehmoment zu erwarten ist, auf Zug beansprucht werden, in einer Grundform mit Wellenbereich 78 auszuführen. Dadurch können die Wellenbereiche 78 des zweiten Federelements 76 einen Längenausgleich in Umfangsrichtung realisieren, der notwendig ist, um axial besonders weiche Federeinrichtungen und/oder besonders große Federwege zu ermöglichen.

Die mit dem zweiten Federelement 76 ausgestatteten Lamellen 10 sind bei dem gezeigten Ausführungsbeispiel als Belagslamellen, also als Lamellen mit Reibflächen 21 aus Belagsmaterial, ausgeführt. Das zweite Federelement 76 kann aber auch derart mit Lamellen kombiniert werden, bei denen die Reibflächen 21 durch einen Metallring oder einen oder mehrere aus einem anderen Werkstoff hergestellten Körper ausgebildet werden. Das zweite Federelement 76 wird dann statt an den Belagsfederungssegmenten 54 an Fortsätzen des die Reibflächen 21 bildenden Körpers befestigt oder durch ein weiteres Zwischenelement mit den Reibflächen 21 verbunden.

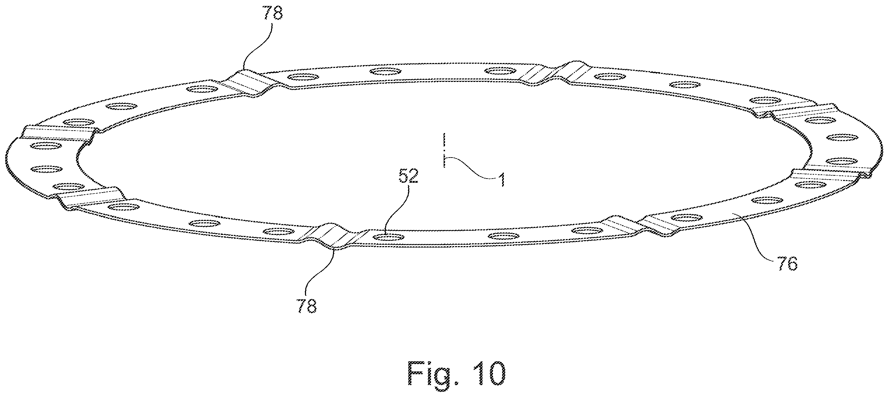

Figur10 zeigt ein ringförmiges zweites Federelement 76 mit am Umfang integrierten Wellenbereichen 78. Es ist ersichtlich, dass am Umfang beidseitig eines jeweiligen Wellenbereichs 78 Löcher 52 angeordnet sind zur Aufnahme von Nietverbindungen. Diese Nietverbindungen sind auf der einen Seite eines jeweiligen Wellenbereichs 78 solche für die Verbindung des zweiten Federelements 76 mit dem Verzahnungskörper 53, und auf der am Umfang anderen Seite eine solche zur mechanischen Verbindung des zweiten Federelements 76 mit einem Belagsfederungssegment 54.

Alle hier gezeigten oder beschriebenen Varianten lassen sich auch auf Außenlamellen, bzw. auf die Verbindungsstelle zwischen Außenlamellen und Außenlamellenträger übertragen. Auch ist es möglich und für einige Anwendungsfälle auch sinnvoll, elastische Lamellenanbindungen an den Innenlamellen und den Außenlamellen der Kupplung oder Bremse einzusetzen.

Weiterhin ist in den Gedanken der Erfindung einbezogen, in einer Kupplung oder einer Bremse axial weiche Lamellen und axial weiche Lamellenträger zu kombinieren. Eine besonderes sinnvolle Kombination ist es, die auf einem axial weichen Innenlamellenträger montierten Innenlamellen mit axial weichen Außenlamellen zu kombinieren oder axial weiche Innenlamellen mit Außenlamellen, die auf einem axial weichen Außenlamellenträger montiert sind, zu kombinieren.

Die zwei dargestellten Anordnungsvarianten für die Federeinrichtung 70 lassen sich durch die Reihenfolge beschreiben, in der die wichtigen Komponenten in der Richtung des Drehmomentenflusses angeordnet werden.

Bei der ersten Variante folgt hinter der mindestens einer Reibfläche 21, die zum Regeln des übertragbaren Kupplungsmoments mit mindestens einem Nachbarbauteil verpresst werden kann, eine axiale verschiebbare Verbindung, über die das Drehmoment übertragen werden kann und die die Verlagerung zweier Bauteile zueinander zulässt. Darauf folgt eine axial elastische verschiebbare Verbindung, über die das Drehmoment übertragen werden kann und die ebenfalls die Verlagerung zweier Bauteile zueinander zulässt. Sinnvollerweise kann das Drehmoment über die in der beschriebenen Anordnung positionierten Komponenten in beide Richtungen übertragen werden. Das Drehmoment kann also auch von der axial elastischen Verbindung, über die das Drehmoment übertragen werden kann und die ebenfalls die Verlagerung zweier Bauteile zueinander zulässt, auf die axiale verschiebbare Verbindung, über die das Drehmoment übertragen werden kann und die die Verlagerung zweier Bauteile zueinander zulässt, übertragen werden und von dort auf die mindestens einer Reibfläche, die zum Regeln des übertragbaren Kupplungsmoments mit mindestens einem Nachbarbauteil verpresst werden kann, übertragen werden.

Bei der zweiten Variante folgt hinter der mindestens einer Reibfläche 21, die zum Regeln des übertragbaren Kupplungsmoments mit mindestens einem Nachbarbauteil verpresst werden kann, eine axiale elastische Verbindung, über die das Drehmoment übertragen werden kann und die die Verlagerung zweier Bauteile zueinander zulässt. Darauffolgt eine axial verschiebbare Verbindung, über die das Drehmoment übertragen werden kann und die ebenfalls die Verlagerung zweier Bauteile zueinander zulässt. Sinnvollerweise kann das Drehmoment über die in der beschriebenen Anordnung positionierten Komponenten in beide Richtungen übertragen werden. Das Drehmoment kann also auch von der axial verschiebbaren Verbindung, über die das Drehmoment übertragen werden kann und die die Verlagerung zweier Bauteile zueinander zulässt, auf die axiale elastische Verbindung, über die das Drehmoment übertragen werden kann, übertragen werden, und von dort auf die mindestens eine Reibfläche, die zum Regeln des übertragbaren Kupplungsmoments mit mindestens einem Nachbarbauteil verpresst werden kann, übertragen werden.

Mit der hier vorgeschlagenen Drehmomentübertragungseinheit wird eine konstruktive Möglichkeit zur Verfügung gestellt, mit relativ geringen Betätigungskräften die Zusammenpressung eines Reibpakets und damit eine zuverlässige Übertragung eines Drehmomentes zu realisieren.

### Bezuqszeichenliste

- 1: Rotationsachse
- 10: Lamellenträger
- 11: Steckverzahnung
- 20: Lamelle
- 21: Reibfläche
- 22: Anlagefläche
- 30: Gegenlamelle
- 31: Reibpaket
- 40: Steg
- 41: Stemmverbindung
- 50: Lamellenträgersegment
- 51: Verzahnung des Lamellenträgersegments
- 52: Loch
- 53: Verzahnungskörper
- 54: Belagsfederungssegment
- 55: Abstandsscheibe
- 56: Aussparung
- 60: Drehmomentübertragungselement
- 61: Profilverzahnung
- 70: Federeinrichtung
- 71: Biegeabschnitt
- 72: Befestigungsabschnitt
- 73: Nietverbindung
- 74: Verbindungselement
- 75: erstes Federelement
- 76: zweites Federelement
- 77: Fixierungsabschnitt
- 78: Wellenbereich
- 79: Loch
- 80: erste Getriebeeingangswelle
- 81: zweite Getriebeeingangswelle
- 90: Doppelkupplungsvorrichtung
- 91: Rotorträger
- 100: elektrische Maschine
- 101: Stator
- 102: Rotor
- 110: Betätigungseinrichtung
- 120: Gehäuse
- 130: Zweimassenschwungrad
- 140: Trennkupplung
- 141: Erstes Rotationslager
- 142: Zweites Rotationslager
- 150: Kurbelwelle
- 151: Schraubverbindung

## Patentansprüche

1. Drehmomentübertragungseinheit zur reibschlüssigen Übertragung eines Drehmoments, umfassend einen Lamellenträger (10) mit mehreren Lamellen (20), die mit Gegenlamellen (30) der Drehmomentübertragungseinheit zu einem Reibpaket (31) zusammendrückbar sind, und mit einem Drehmomentübertragungselement (60), mit dem von dem Lamellenträger (10) ein Drehmoment auf ein an den Lamellenträger (10) angeschlossenes oder anschließbares Maschinenelement, wie z.B. eine Getriebeeingangswelle (80), übertragbar ist, wobei die Lamellen (20) auf dem Lamellenträger (10) unter Ausführung einer Gleitbewegung auf zumindest einem ein Drehmoment formschlüssig übertragbaren Formelement des Lamellenträgers (10) axial verschiebbar angeordnet sind, wobei die Drehmomentübertragungseinheit weiterhin zumindest eine axial wirkende Federeinrichtung (70) aufweist, mit der wenigstens eine Lamelle (20) zusätzlich zur Gleitbewegung in Bezug zum Drehmomentübertragungselement (60) axial verlagerbar ist, **dadurch gekennzeichnet, dass** der Lamellenträger (10) mehrere Lamellenträgersegmente (50) aufweist, die jeweilige Formelemente aufweisen, auf denen jeweils zumindest eine Lamelle (10) rotationsfest angeordnet und unter Ausführung der Gleitbewegung axial verschiebbar ist.

2. Drehmomentübertragungseinheit nach Anspruch 1, **dadurch gekennzeichnet, dass** die Drehmomentübertragungseinheit weiterhin wenigstens einer Lamelle (20) zugeordnet einen Steg (40) aufweist, der rotationsfest mit dem Drehmomentübertragungselement (60) verbunden ist, und die Federeinrichtung (70) als extra Bauelement im Drehmomentübertragungspfad zwischen einer Reibfläche (21) einer jeweiligen Lamelle (20) und Steg (40) angeordnet ist.

3. Drehmomentübertragungseinheit nach Anspruch 1 oder 2, **dadurch gekennzeichnet, dass** die Formelemente als Verzahnungen (51) ausgebildet sind.

4. Drehmomentübertragungseinheit nach einem der Ansprüche 1 bis 3, **dadurch gekennzeichnet, dass** die Federeinrichtung mehrere erste Federelemente (75) aufweist und jeweils eines der mehreren ersten Federelemente (75) an einem jeweiligen der mehreren Lamellenträgersegmente (50) angeordnet ist, so dass eine Gleitbewegung eines jeweiligen Lamellenträgersegments (50) mittels eines jeweiligen ersten Federelements (75) ermöglicht wird.

5. Drehmomentübertragungseinheit nach Anspruch 4, **dadurch gekennzeichnet, dass** das erste Federelement (75) und das Drehmomentübertragungselement (60) mittels wenigstens eines Verbindungselements (74), vorzugsweise mehrerer Verbindungselemente wie z. B. Niete, und insbesondere über den Steg (40), derart miteinander verbunden sind, dass ein Drehmoment von dem ersten Federelement (75) auf das Drehmomentübertragungselement (60), insbesondere mittelbar über den Steg (40), übertragbar ist.

6. Drehmomentübertragungseinheit nach einem der Ansprüche 4 und 5, **dadurch gekennzeichnet, dass** das erste Federelement (75) an dem Lamellenträgersegment (50) fest angeordnet ist, insbesondere mittels mehrerer Nietverbindungen (73).

7. Drehmomentübertragungseinheit nach Anspruch 6, **dadurch gekennzeichnet, dass** das erste Federelement (75) eine im Wesentlichen ringförmige Biegefeder ist, die wenigstens einen Biegeabschnitt (71) sowie in Bezug dazu radial versetzt wenigstens einen, insbesondere mehrere Befestigungsabschnitte (72) zur mechanischen Befestigung an einem Lamellenträgersegment (50) oder einem Steg oder einem Drehmomentübertragungselement aufweist.

8. Drehmomentübertragungseinheit nach einem der Ansprüche 1 bis 7, **dadurch gekennzeichnet, dass** die Federeinrichtung (70) ein zweites Federelement (76) als Bestandteil einer Lamelle (20) im Drehmomentübertragungspfad zwischen einer Reibfläche (21) einer jeweiligen Lamelle (20) und einer Anlagefläche (22) der Lamelle (20), mit der die Lamelle (20) an dem Formelement, insbesondere an der Verzahnung (51), des Lamellenträgersegments (50) gleitet, aufweist.

9. Drehmomentübertragungseinheit nach Anspruch 8, **dadurch gekennzeichnet, dass** das zweite Federelement (76) als ringförmige Feder ausgestaltet ist, wobei an der ringförmigen Feder mechanische Verbindungen zur Reibfläche (21) sowie mechanische Verbindungen zur Anlagefläche (22) ausgebildet sind.

10. Antriebsstrang für ein Kraftfahrzeug mit einer Antriebsmaschine, insbesondere mit einer Verbrennungskraftmaschine, umfassend eine als Kupplungseinrichtung ausgestaltete Drehmomentübertragungseinheit nach einem der Ansprüche 1 bis 9, sowie ein Fahrzeuggetriebe, wobei die Drehmomentübertragungseinheit mit der Antriebsmaschine und dem Fahrzeuggetriebe mechanisch verbunden ist.

## Claims

1. A torque transmission unit for the frictional transmission of a torque, comprising a disk carrier (10) with a plurality of disks (20), which can be pressed together with mating disks (30) of the torque transmission unit to form a friction assembly (31), and with a torque transmission element (60) by means of which a torque can be transmitted from the disk carrier (10) to a machine element connected or connectable to the disk carrier (10), such as a transmission input shaft (80), wherein the disks (20) are arranged on the disk carrier (10) in an axially displaceable manner while executing a sliding movement on at least one shaped element of the disk carrier (10), which can transmit a torque in a form-fitting manner, wherein the torque transmission unit further comprises at least one axially acting spring device (70) by means of which at least one disk (20) can be axially displaced in relation to the torque transmission element (60) in addition to the sliding movement, **characterised in that** the disk carrier (10) has a plurality of disk carrier segments (50), which have respective shaped elements on each of which at least one disk (10) is arranged in a non-rotatable manner and can be axially displaced while executing the sliding movement.

2. The torque transmission unit according to claim 1, **characterised in that** the torque transmission unit further comprises, associated with at least one disk (20), a web (40) which is connected to the torque transmission element (60) in a non-rotatable manner, and the spring device (70) is arranged as an extra component in the torque transmission path between a friction surface (21) of a respective disk (20) and the web (40).

3. The torque transmission unit according to claim 1 or 2, **characterised in that** the shaped elements are formed as toothings (51).

4. The torque transmission unit according to any one of claims 1 to 3, **characterised in that** the spring device comprises a plurality of first spring elements (75), and a respective one of the plurality of first spring elements (75) is arranged on a respective one of the plurality of disk carrier segments (50) so as to allow a sliding movement of a respective disk carrier segment (50) by means of a respective first spring element (75).

5. The torque transmission unit according to claim 4, **characterised in that** the first spring element (75) and the torque transmission element (60) are connected to one another by means of at least one connecting element (74), preferably a plurality of connecting elements such as rivets, and in particular via the web (40), in such a manner that a torque can be transmitted from the first spring element (75) to the torque transmission element (60), in particular indirectly via the web (40).

6. The torque transmission unit according to any one of claims 4 and 5, **characterised in that** the first spring element (75) is fixedly arranged on the disk carrier segment (50), in particular by means of a plurality of riveted connections (73).

7. The torque transmission unit according to claim 6, **characterised in that** the first spring element (75) is a substantially annular bending spring that has at least one bending section (71) and, radially offset with respect thereto, at least one, in particular a plurality of fastening sections (72) for mechanical fastening to a disk carrier segment (50) or a web or a torque transmission element.

8. The torque transmission unit according to any one of claims 1 to 7, **characterised in that** the spring device (70) has a second spring element (76) as a component of a disk (20) in the torque transmission path between a friction surface (21) of a respective disk (20) and a contact surface (22) of the disk (20) with which the disk (20) slides on the shaped element, in particular on the toothing (51), of the disk carrier segment (50).

9. The torque transmission unit according to claim 8, **characterised in that** the second spring element (76) is designed as an annular spring, wherein mechanical connections to the friction surface (21) and mechanical connections to the contact surface (22) are formed on the annular spring.

10. A drive train for a motor vehicle with a drive machine, in particular with an internal combustion engine, comprising a torque transmission unit designed as a clutch device according to any one of claims 1 to 9, and a vehicle transmission, wherein the torque transmission unit is mechanically connected to the drive machine and the vehicle transmission.

## Revendications

1. Unité de transmission de couple destinée à la transmission par friction d'un couple, comprenant un support (10) de disques doté d'une pluralité de disques (20) qui peuvent être comprimés avec des contre-disques (30) de l'unité de transmission de couple pour former un ensemble de friction (31), et doté d'un élément de transmission de couple (60) grâce auquel le support (10) de disques peut transmettre un couple à un élément de machine, tel qu'un arbre d'entrée de transmission (80), qui est ou peut être relié au support (10) de disques, les disques (20) étant agencés sur le support (10) de disques de manière à pouvoir se déplacer axialement lors de l'exécution d'un mouvement de coulissement sur au moins un élément façonné à transfert positif de couple du support (10) de disques, l'unité de transmission de couple présentant en outre au moins un dispositif à ressort (70) à action axiale, avec lequel au moins un disque (20) peut être déplacé axialement en plus du mouvement de coulissement par rapport à l'élément de transmission de couple (60), **caractérisée en ce que** le support (10) de disques présente une pluralité de segments (50) de support de disques qui présentent des éléments façonnés respectifs sur lesquels au moins un disque (10) est disposé de manière solidaire en rotation et peut être déplacé axialement lors de l'exécution du mouvement de coulissement.

2. Unité de transmission de couple selon la revendication 1, **caractérisée en ce que** l'unité de transmission de couple présente en outre un élément jointif (40), associé à au moins un disque (20), qui est solidaire en rotation avec l'élément de transmission de couple (60), et le dispositif à ressort (70) étant disposé en tant qu'élément structural supplémentaire dans le chemin de transmission de couple entre une surface de friction (21) d'un disque (20) correspondant et de l'élément jointif (40).

3. Unité de transmission de couple selon la revendication 1 ou 2, **caractérisée en ce que** les éléments façonnés forment des dentures (51).

4. Unité de transmission de couple selon l'une des revendications 1 à 3, **caractérisée en ce que** le dispositif à ressort présente plusieurs premiers éléments ressort (75) et un élément ressort de la pluralité des premiers éléments ressorts (75) étant disposé sur un segment correspondant de la pluralité de segments (50) de support de disque, de sorte qu'un mouvement de coulissement d'un segment (50) de support de disque est rendu possible au moyen d'un premier élément ressort (75) correspondant.

5. Unité de transmission de couple selon la revendication 4, **caractérisée en ce que** le premier élément ressort (75) et l'élément de transmission de couple (60) sont reliés l'un à l'autre au moyen d'au moins un élément de liaison (74), de préférence d'une pluralité d'éléments de liaison tels que des rivets, et en particulier par l'intermédiaire de l'élément jointif (40), de sorte qu'un couple du premier élément ressort (75) peut être transmis à l'élément de transmission de couple (60), en particulier indirectement par l'intermédiaire de l'élément jointif (40).

6. Unité de transmission de couple selon l'une des revendications 4 et 5, **caractérisée en ce que** le premier élément ressort (75) est disposé de manière fixe sur le segment (50) de support de disque, en particulier au moyen d'une pluralité de liaisons rivetées (73).

7. Unité de transmission de couple selon la revendication 6, **caractérisée en ce que** le premier élément ressort (75) est un ressort de flexion sensiblement annulaire qui présente au moins une section de flexion (71) ainsi qu'au moins une, en particulier plusieurs sections de fixation (72) décalées radialement. en relation avec celui-ci pour la fixation mécanique à un segment (50) de support de disques ou à un élément jointif ou à un élément de transmission de couple.

8. Unité de transmission de couple selon l'une des revendications 1 à 7, **caractérisée en ce que** le dispositif à ressort (70) présente un second élément ressort (76) en tant que partie d'un disque (20) dans le chemin de transmission de couple entre une surface de friction (21) d'un disque correspondant (20) et une surface de contact (22) du disque (20) avec laquelle le disque (20) glisse sur l'élément façonné, en particulier sur la denture (51) du segment (50) de support de disques.

9. Unité de transmission de couple selon la revendication 8, **caractérisée en ce que** le second élément ressort (76) est réalisé sous la forme d'un ressort annulaire, des liaisons mécaniques avec la surface de friction (21) et des liaisons mécaniques avec la surface de contact (22) étant formées sur les ressorts annulaires.

10. Chaîne cinématique pour un véhicule automobile comprenant un moteur d'entraînement, en particulier un moteur à combustion interne comprenant une unité de transmission de couple conçue comme un dispositif d'embrayage selon l'une des revendications 1 à 9, ainsi qu'une transmission de véhicule, l'unité de transmission de couple étant reliée mécaniquement au moteur d'entraînement et à la transmission du véhicule.
